# FASCICULE DE BREVET EUROPEEN

(11) **EP 0 498 875 B1**
(45) Date de publication et mention de la délivrance du brevet: **04.05.1994**
(21) Numéro de dépôt: 91916319.6
(22) Date de dépôt: 03.09.1991
(51) Int. Cl.: C02F 3/30

(54) **PROCEDE ET INSTALLATION D'EPURATION BIOLOGIQUE DES EAUX RESIDUAIRES INCLUANT LA DENITRIFICATION**
VERFAHREN UND VORRICHTUNG FÜR DIE BIOLOGISCHE REINIGUNG VON ABWASSER EINSCHLIESSLICH DER DENITRIFIKATION
BIOLOGICAL TREATMENT METHOD AND APPARATUS INCLUDING DENITRIFICATION FOR WASTE WATER

(30) Priorité: 04.09.1990 FR 9010960
(43) Date de publication de la demande: 19.08.1992
(73) Titulaire: OTV (OMNIUM de TRAITEMENTS et de VALORISATION), 92407 Courbevoie (FR); CENTRE INTERNATIONAL DE L'EAU DE NANCY ( NAN.C.I.E.), F-54500 Vandoeuvre-les-Nancy (FR); Coulom, Thierry, F-54000 Nancy (FR)
(72) Inventeur: COULOM, Thierry, F-54000 Nancy (FR); SIBONY, Jacques, F-75018 Paris (FR)
(74) Mandataire: Vidon, Patrice
(86) Numéro de dépôt international: FR9100702
(87) Numéro de publication internationale: WO9204285

(56) Documents cités:
- DE-A- 4 004 762
- FR-A- 2 372 121
- P.F.COOPER ET AL."BIOLOGICAL FLUIDISED BED TREATMENT OF WATER AND WASTEWATER ",1981 ELLIS HORWOOD LTD.,CHICHESTER,GB
- PATENT ABSTRACTS OF JAPAN vol.10,No.194(C-358) (2250) 8 JULY 1986 & JP A 61 038 696(EBARA INFILCO CO LTD) 24 FEBRUARY 1986

## Description

La présente invention a trait au domaine du traitement des eaux usées et résiduaires, ou toutes eaux contenant de l'azote ammoniacal, par le procédé biologique dit aux boues activées, dans des cuves ou bassins de fermentation où les cultures de micro-organismes, dispersées dans un milieu aqueux plus ou moins riche en éléments minéraux, se nourrissant d'un substrat organique ou micro-organique. Elle concerne plus spécialement un procédé et une installation d'épuration des eaux permettant d'éliminer ou réduire totalement l'azote total de l'eau par transformation de l'azote ammoniacal en ions nitrates puis élimination de ces derniers, autrement dit selon un processus de nitrification puis dénitrification.

Dans la technique connue du traitement biologique des eaux résiduaires, l'eau, après décantation, est envoyée dans un bassin aéré puis dans un clarificateur d'où la boue ou biomasse est recyclée en tête du bassin. On utilise des bactéries hétérotrophes aérobies qui éliminent le carbone par utilisation de l'oxygène dissous dans le milieu aqueux et des bactéries autotrophes pour transformer l'ammoniac en nitrites et nitrates. Toutefois, le taux de croissance des bactéries autotrophes étant plus faible, elles ne peuvent se maintenir de façon stable dans la boue activée que si l'âge moyen de cette dernière est élevé, généralement entre 5 et 30 jours.

Afin d'obtenir un développement normal de ces bactéries autotrophes dites nitrifiantes, il est alors nécessaire de concevoir un volume de bassin au moins trois fois plus important, de façon à multiplier par le même chiffre le temps de séjour et l'âge des boues. On se heurte alors à des problèmes de coûts importants pour les installations. En outre, si le processus de nitrification a bien lieu dans ce cas, on ne peut parvenir à la fonction de dénitrification c'est-à-dire de suppression des nitrates de l'eau.

Dans le but d'obtenir successivement une nitrification puis une dénitrification, tout en évitant la mise en oeuvre de plusieurs séries de bassins, on a préconisé l'utilisation d'un bassin unique muni de sections ou zones alternativement aérées (avec une teneur maximale en oxygène dissous de 1,5 p.p.m. maximum) et non aérées ou à la limite de l'anaérobiose (brevet français publié n° 2 372 121). Malgré les perfectionnements apportés, un tel système exige la mise en oeuvre de volumes importants pour le bassin à biomasse ou alors la transformation des bassins existants en dispositifs à zones multiples alternées.

Afin de pouvoir s'affranchir de la nécessité d'utiliser un bassin à boue activée de très grand volume pour obtenir un temps de séjour prolongé et un âge des boues supérieur à 5 jours en vue d'une possible nitrification puis dénitrification, on peut penser à adjoindre au système conventionnel précité d'épuration, un ensemble à biomasse fixé comme par exemple un dispositif de filtration (épuration à lit de charbon actif ou autre charge granulaire type BIOCARBONE marque déposée OTV - ou équivalente). Toutefois, si le dispositif est installé en fin de traitement, après la clarification, la phase de dénitrification ne peut avoir lieu ; si par contre il est prévu en amont du bassin à boue activée, on obtient une nitrification/dénitrification mais le bassin lui-même n'est plus véritablement opérationnel ; enfin si le dispositif est placé entre le bassin à boue et le clarificateur, la biomasse introduite dans le lit fixe provoque rapidement des phénomènes de colmatage.

L'invention a donc pour but, compte tenu de cet état de la technique, de proposer un procédé permettant d'assurer dans de bonnes conditions à la fois l'épuration des pollutions carbonées et les phases successives de nitrification et dénitrification dans une installation générale de traitement qui ne nécessite pas d'importantes modifications du volume du bassin à boue activée et qui peut donc être adaptée aux dispositifs conventionnels existants d'épuration.

Conformément au principe général du procédé de l'invention, où l'ensemble du traitement inclut, après une éventuelle décantation primaire, un séjour en bassin à boue activée et une clarification, on prévoit qu'une partie au moins de la liqueur mixte dudit bassin est envoyée dans un lit fluidisé séparé, garni de granule solide en expansion, avant de rejoindre la phase de clarification.

L'utilisation de la technique des lits fluidisés est, certes, bien connue dans l'épuration des eaux notamment dans le traitement d'une eau brute pour réduire le taux de M.E.S. (Matières en Suspension) ou encore pour nitrifier c'est-à-dire transformer en nitrates l'ammoniaque de l'eau. Toutefois, on ne peut envisager la phase de dénitrification car la quantité de matières carbonées n'est alors plus suffisante.

Conformément à l'originalité du procédé de l'invention, le réacteur à lit fluidisé indépendant est alimenté directement par la biomasse issue du bassin de traitement biologique à boue activée. Cette solution permet de multiplier par un nombre important (couramment par 3) le volume de la liqueur mixte et donc d'augmenter l'âge des boues en favorisant l'action des bactéries nitrifiantes. Si, par exemple, on ajoute un réacteur à lit fluidisé à un bassin à boue activée muni de deux zones dont l'une anoxique et l'autre normalement aérée (en aérobie) et si l'on effectue un recyclage de la liqueur mixte (donc des nitrates) ainsi d'ailleurs que d'une partie des boues, on peut obtenir d'excellents résultats de nitrification et dénitrification en conservant la taille d'un bassin à boue déjà installé.

Selon un autre avantage du procédé, on utilise pour la phase de dénitrification le carbone contenu dans l'eau à traiter sans avoir à utiliser d'additif carboné supplémentaire, comme par exemple du méthanol si l'on adoptait la solution précitée d'un réacteur à biomasse fixée ou encore d'un lit fluidisé après le clarificateur.

Le choix du dispositif de fluidisation et la détermination des divers paramètres et de leur optimum peuvent être effectués selon les données connues par l'homme de l'art. Toutefois, il s'avère particulièrement avantageux, quoique non limitatif, d'adopter un système à plusieurs contenants avec injection gazeuse, tel que par exemple celui faisant l'objet du brevet européen n° 0 162 796 de 1984.

Le granulé solide en expansion, qui sert de support d'accrochage et de développement des bactéries, est choisi parmi les matériaux insolubles et inertes à l'égard de la biomasse et de préférence de densité supérieure à 1. A titre préférentiel on peut utiliser un solide minéral poreux du type : argile, schiste, anthracite, charbon, pierre ponce etc. ... de granulomètrie comprise entre 0,3 et 3 mm.

L'implantation de la phase de fluidisation dans un système de traitement biologique conventionnel d'eau résiduaire peut être réalisée de plusieurs façons et l'on décrira ci-dessous quatre modes principaux d'exécution en se référant à la planche des dessins annexés.

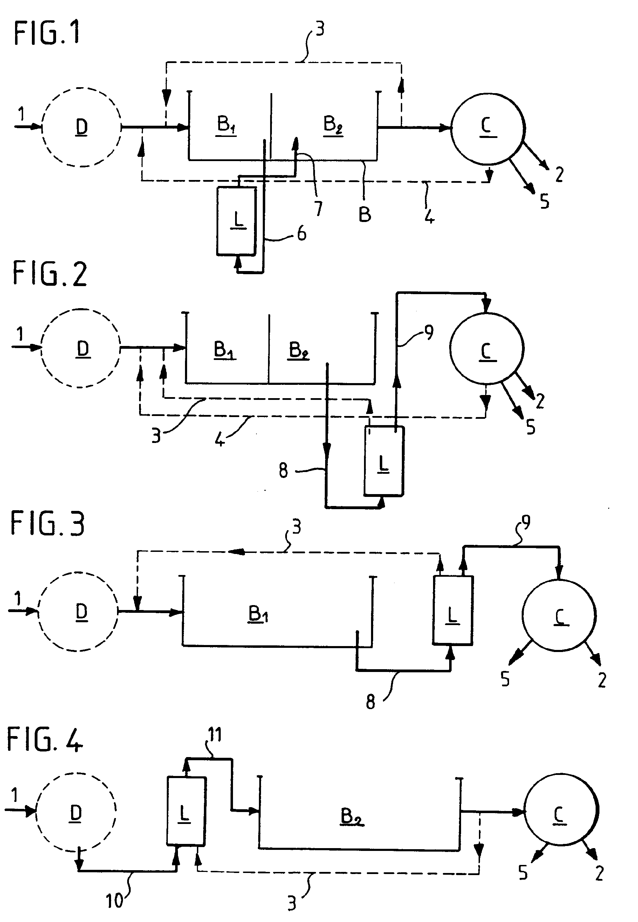

On a illustré très schématiquement sur ces figures 1 à 4 une installation classique du traitement d'eau résiduaire par voie biologique, comprenant la succession, dans le sens du traitement : d'un éventuel décanteur primaire D ; d'un bassin B à boue activée pouvant ou non être séparé en des zones : anoxique B1 (totalement privée d'oxygène) ou aérée B2 (en aérobie) et d'un clarificateur C. L'eau brute à traiter 1 suit le cheminement de gauche à droite et l'eau épurée 2 est récupérée à la sortie du clarificateur C. La ligne en pointillés 3 correspond à un recyclage de la liqueur mixte alors que la ligne en pointillés 4 représente le recyclage des boues d'épuration. Les boues en excès 5 retirées du clarificateur C sont stockées et/ou traitées de façon classique. Le dispositif à lit fluidisé, incorporé à l'installation de traitement selon l'invention, est représenté par la lettre L.

Conformément au principe illustré sur la figure 1, le système à lit fluidisé L est disposé en aval de la zone anoxique B1 créée dans la cuve de boue existante. Il est alimenté en courant ascendant par la biomasse 6 tirée de cette zone B1 et son effluent 7 est envoyé dans la zone en aérobie B2 du bassin à boue activée.

Selon la variante de la figure 2, la fluidisation est installée entre la zone en aérobie B2 et le clarificateur C. L'alimentation en ascendant 8 est soutirée de B2 alors que l'effluent 9, qui a traversé le lit fluidisé est envoyé en tête du clarificateur C.

Conformément à un autre mode de réalisation illustré sur la figure 3, le bassin de traitement se trouve totalement en anoxie B1 alors que la fluidisation L, installée en aval du bassin, fonctionne en aérobie, son effluent 9 étant envoyé en tête du clarificateur C.

Enfin, selon la variante de la figure 4 et toujours dans le cadre de l'invention, on peut prévoir l'installation de fluidisation L en amont du bassin de traitement à condition de la faire fonctionner en milieu anoxique alors que la cuve B2 est totalement en aérobie. Dans ce cas, L est alimenté en ascendant par l'eau 10 sortant du décanteur D et son effluent 11 est envoyé dans le bassin aéré B2 à boue activée. Le recyclage de la liqueur mixte 3 est ici envoyé à la base du fluidificateur L dépourvu d'oxygène ou air.

Grâce au principe selon l'invention selon lequel la biomasse circule dans un fluidiseur annexé à l'installation classique, il devient possible d'effectuer la nitrification et la dénitrification d'une eau à épurer sans avoir à augmenter considérablement le volume des cuves à boues activées. Le procédé convient donc bien pour une adaptation à une installation déjà existante dans laquelle il suffit d'intercaler un dispositif à lit fluidisé selon l'une ou l'autre des variantes précitées.

L'exemple de réalisation décrit ci-après met bien en évidence cette possibilité d'adaptation.

On a travaillé sur une station de traitement d'eau résiduaire correspondant à une ville de 10 000 habitants et traitant, pour épuration, un débit d'eau d'environ 2 500 m³/jour dont la teneur en DBO était d'environ 650 kg/jour. La station était équipée d'un décanteur primaire, d'un bassin à boue activée et d'un clarificateur. Le décanteur primaire permettait d'éliminer environ 200 kg de DBO par décantation spontanée. Il restait donc 450 kg de DBO pour la cuve à boue activée existante, de volume 300 m³ environ. Ce volume contenait une liqueur mixte (ou biomasse) à environ 3 g/l de M.E.S. soit au total 900 kg. La charge massique pour la biomasse était donc de 0,5 kg de DBO par kg de M.E.S. et par jour. Pour une telle charge la station ne pouvait effectuer la nitrification du fait de l'âge insuffisant des boues dans le bassin.

Afin que la nitrification puisse avoir lieu dans une telle installation il faudrait ramener la charge massique à un maximum de 0,15, donc avoir une quantité de biomasse de 450/0,15 soit 3 000 kg. Pour une quantité de M.E.S. de 3 g/l il serait donc nécessaire de disposer d'un volume supplémentaire de 700 m³ de bassin à boue et donc construire plus de 2 bacs à biomasse équivalents au bac existant. En outre, il serait nécessaire de recycler la liqueur mixte dans une zone anoxique à créer dans les 1 000 m³ de bassin, ceci pour obtenir la dénitrification.

Conformément à l'invention, on a intercalé un système à lit fluidisé dans l'installation conventionnelle susvisée selon la réalisation illustrée sur la figure 2 des dessins annexées. Ce système était destiné à apporter une quantité de biomasse supplémentaire de 2 100 kg (3 000-900). Du fait qu'un tel système pouvait fonctionner avec une biomasse à 12 g/l de M.E.S. (ou 12 kg/m³) il a suffit d'un volume supplémentaire à construire de 2 100/12 soit 175 m³, au lieu des 700 m³ précités.

Les résultats des expérimentations dans l'exemple susdécrit s'analysent comme suit :
- l'eau brute à traiter contenait 60 g d'azote (NH₃) par m³ d'eau. A la sortie de la station existante, non modifiée, il restait encore 38 mg/l d'azote (NH₃). Grâce à la mise en place du système à lit fluidisé selon l'invention, on a pu descendre à un taux de 3 mg/l d'azote (NH₃) et à une valeur de nitrates de 5 mg/l. La quantité d'azote total à la sortie était alors de 8 mg/l donc inférieure à la limite de 10 fixée par la norme française NGL2.

## Revendications

1. Procédé de purification d'eaux résiduaires par boues activées en vue d'éliminer à la fois les pollutions d'origine carbonée et celles d'origine azotée selon un processus de nitrification/dénitrification, selon lequel l'eau séjourne dans un bassin de boue activée avant d'être soumise à une clarification, le procédé étant caractérisé en ce qu'une partie au moins de la liqueur mixte dudit bassin est envoyée dans un lit fluidisé séparé, garni de granulé solide en expansion, avant de rejoindre la phase de clarification.

2. Procédé selon la revendication 1, caractérisé en ce que la liqueur mixte d'alimentation du lit fluidisé est soutirée dans une zone anoxique du bassin de boue activée alors que l'effluent du lit est envoyé dans une zone en aérobie dudit bassin.

3. Procédé selon la revendication 1, caractérisé en ce que la liqueur mixte d'alimentation du lit fluidisé est soutirée dans une zone en aérobie du bassin de boue activée alors que l'effluent du lit est envoyé en tête de la clarification.

4. Procédé selon la revendication 1, caractérisé en ce que l'ensemble du bassin fonctionne en anoxie alors que le lit fluidisé fonctionne en totale aérobie.

5. Procédé selon la revendication 1, caractérisé en ce que l'ensemble du bassin est en aérobie alors que le lit fluidisé fonctionne en anoxie.

6. Procédé selon l'une quelconque des revendications 2 à 5, caractérisé en ce que l'on effectue un recyclage de la liqueur mixte depuis la sortie jusqu'à l'entrée du bassin à boue activée ou du lit fluidisé ainsi qu'un recyclage des boues depuis la sortie de la clarification jusqu'à l'entrée dudit bassin ou du lit fluidisé.

7. Installation de traitement d'eaux résiduaires par voie biologique pour la mise en oeuvre du procédé selon l'une quelconque des revendications 1 à 6, du type incluant, après un éventuel décanteur primaire (D), un bassin à boues activées (B) comprenant au moins une zone de type aérobie (B₂) et/ou anaérobie (B₁) ainsi qu'un clarificateur final (C), l'installation étant caractérisée en ce qu'elle comporte en outre un réacteur à lit fluidisé (L) installé entre le décanteur (D) et le clarificateur (C), séparé desdites zones (B₁, B₂) et relié directement au bassin (B).

## Patentansprüche

1. Verfahren zum Reinigen von Abwasser durch Belebtschlamm zum Entfernen von Verunreinigungen von Kohlenstoffverbindungen und Verunreinigungen aus einem Nitrifikations/Denitrifikations-Verfahren, bei dem das Abwasser in einem Belebungsbecken mit Belebtschlamm verweilt, bevor es einer Klärung unterworfen wird, dadurch gekennzeichnet, daß mindestens ein Teil der Mischflüssigkeit aus dem Belebungsbecken in ein separates fluidisiertes Fließbett eingeleitet wird, welches festes Granulat in expandierter Form aufweist, bevor es in die Klärphase zurückgeleitet wird.

2. Verfahren nach Anspruch 1,
dadurch gekennzeichnet, daß die Mischflüssigkeit zum Speisen des Fließbettes einer anoxischen Zone des Belebungsbeckens für den Belebtschlamm entnommen wird, und daß der aus dem Fließbett abströmende Stoff in eine aerobe Zone des Belebungsbeckens geleitet wird.

3. Verfahren nach Anspruch 1,
dadurch gekennzeichnet, daß die Mischflüssigkeit zum Einspeisen in das Fließbett einer aeroben Zone des Belebungsbeckens für den Belebtschlamm entnommen wird und daß der aus dem Fließbett abströmende Stoff in den Zulauf der Klärung eingeleitet wird.

4. Verfahren nach Anspruch 1,
dadurch gekennzeichnet, daß das gesamte Belebungsbecken anoxisch arbeitet und daß das Fließbett total aerob arbeitet.

5. Verfahren nach Anspruch 1,
dadurch gekennzeichnet, daß das gesamte Belebungsbecken aerob ist und daß das Fließbett anoxisch arbeitet.

6. Verfahren nach einem der Ansprüche 2 bis 5,
gekennzeichnet durch eine Rückführung der Mischflüssigkeit von dem Ausgang des Belebungsbeckens für den Belebtschlamm zum Eingang des besagten Belebungsbeckens oder zu dem Fließbett und durch eine Rückführung des Schlamms von dem Ausgang der Klärung zu dem Eingang des besagten Belebungsbeckens oder des Fließbettes.

7. Vorrichtung zum biologischen Behandeln von Abwässern,
insbesondere zum Durchführen des Verfahrens nach einem der Ansprüche 1 bis 6, gegebenenfalls mit einer ersten Klärstufe (Dekanter) (D), mit einem Belebungsbecken (B) für Belebtschlamm, das mindestens eine aerobe Zone (B₂) und/oder eine anaerobe Zone (B₁) aufweist, und mit einer letzten Klärstufe (C),
gekennzeichnet durch einen Fließbett-Reaktor (L), der zwischen den Dekanter (D) und die letzte Klärstufe (C) geschaltet ist und die besagten Zonen (B₁, B₂) voneinander trennt und direkt mit dem Belebungsbecken (B) verbunden ist.

## Claims

1. Method for the purification of wastewater by activated sludge with a view to the elimination of both pollution of carbonaceous origin and pollution of nitrogenous origin by a process of nitrification/ denitrification, according to which the water remains in an activated sludge basin before being subjected to a clarification, the method being characterized in that at least a part of the mixed liquor from the said basin is sent into a separate fluidized bed, packed with solid expanded granular material, before joining the clarification step.

2. Method according to Claim 1, characterized in that the mixed liquor feeding the fluidized bed is drawn off into an anoxic zone of the activated sludge basin while the effluent from the bed is sent to an aerobic zone of the said basin.

3. Method according to Claim 1, characterized in that the mixed liquor feeding the fluidized bed is drawn off into an aerobic zone of the activated sludge basin while the effluent from the bed is sent to the top of the clarifier.

4. Method according to Claim 1, characterized in that the entire basin works in anoxic mode while the fluidized bed works in total aerobic mode.

5. Method according to Claim 1, characterized in that the entire basin works in aerobic mode while the fluidized bed works in anoxic mode.

6. Method according to any one of Claims 2 to 5, characterized in that a recycling is done of the mixed liquor from the outlet to the inlet of the activated sludge basin or of the fluidized bed, as well as a recycling of the sludge from the outlet of the clarifier up to the inlet of the said basin or of the said fluidized bed.

7. Installation for the treatment of wastewater by biological means for the implementation of the method according to any one of Claims 1 to 6, of the type including, after a primary settling tank (D) if necessary, an activated sludge basin (B) comprising at least one aerobic (B₂) and/or anaerobic (B₁) type zone as well as a final clarifier (C), the installation being characterized in that it further comprises a fluidized bed reactor (L) installed between the settling tank (D) and the clarifier (C), separated from the said zones (B₁, B₂) and directly connected to the basin (B).
